# EUROPEAN PATENT APPLICATION

(11) **EP 4 807 271 A1**
(43) Date of publication of application: **16.09.2026**
(21) Application number: 24890066.4
(22) Date of filing: 07.06.2024
(51) Int. Cl.: F24F 12/00

(54) **HEAT EXCHANGER UNIT AND ENERGY STORAGE DEVICE**

(30) Priority: 16.11.2023 CN 202311532829
(71) Applicant: Contemporary Amperex Technology Co., Limited, Ningde, Fujian 352100 (CN)
(72) Inventor: LI, Jinkui, Ningde, Fujian 352100 (CN); HUANG, Xiaoteng, Ningde, Fujian 352100 (CN); LI, Qing, Ningde, Fujian 352100 (CN); YE, Weida, Ningde, Fujian 352100 (CN); OUYANG, Shijie, Ningde, Fujian 352100 (CN)
(74) Representative: Kraus & Lederer PartGmbB
(86) International application number: PCT/CN2024/098084
(87) International publication number: WO 2025/102697

(57) **Abstract**

Disclosed in the present disclosure are a heat exchange unit (1) and an energy storage device. The heat exchange unit includes a housing (10), a heat exchange system, a plurality of fans (12), and at least one partition plate assembly (13); the housing (10) is provided with a first wall (10a), and the first wall (10a) is provided with a plurality of layers of air supply ports (10b); the heat exchange system is provided with a condenser assembly (11), the condenser assembly (11) is disposed on one side of the first wall (10a) in a thickness direction, and a cavity (1a) is defined between the condenser assembly (11) and the first wall (10a); the partition plate assembly (13) is provided with a partition position, and at the partition position, the partition plate assembly (13) partitions the cavity (1a) into a plurality of subspaces (1b) that are not in communication with each other, and each subspace (1b) is in communication with a corresponding layer of air supply ports (10b).

## Description

### CROSS-REFERENCE TO RELATED APPLICATION

The present disclosure is presented based on Chinese Patent Application No. 202311532829.1, filed on November 16, 2023 and entitled "HEAT EXCHANGE UNIT AND ENERGY STORAGE DEVICE", and claims priority to the Chinese Patent Application, the content of which is incorporated herein by reference in its entirety.

### TECHNICAL FIELD

The present disclosure relates to the technical field of energy storage devices, and in particular, to a heat exchange unit and an energy storage device.

### BACKGROUND

With the rapid development of new energy technologies, energy storage devices have become one of the important research directions in the field of new energy, and heat exchange units, as important apparatuses in energy storage devices, have also received widespread attention. In the related art, a heat exchange unit includes a housing, fans, and condensers. The condensers are disposed on both sides of the fan, and a plurality of fans are mounted on the outer wall surface of the housing in at least two columns or two rows. The airflow in the external environment enters the housing to exchange heat with the condensers and is then discharged by means of the fans. In one aspect, the condensers disposed on both sides of the fan will lengthen the airflow outflow path and increase the resistance to the airflow being discharged from the housing, thereby increasing the load on the fans and increasing the dimension of the heat exchange unit in the width direction. In another aspect, when the airflow subjected to heat exchange by means of the condenser is discharged from the housing under the driving effect of a plurality of rows or columns of fans, turbulence is prone to occur, affecting the uniformity of airflow circulation.

### SUMMARY

To solve the above technical problems, the present disclosure provides a heat exchange unit and an energy storage device. The heat exchange unit features a high compactness in layout, and can shorten the airflow outflow path and increase the uniformity of airflow circulation.

The present disclosure is implemented by the following technical solutions:
A first aspect of the present disclosure provides a heat exchange unit. The heat exchange unit includes:
a housing, where the housing is provided with a first wall, the first wall is provided with a plurality of layers of air supply ports, and the plurality of layers of air supply ports are spaced apart in a first direction;
an air conditioning system, where the air conditioning system is provided with a condenser assembly, the condenser assembly is disposed on one side of the first wall in a thickness direction, and a cavity is defined between the condenser assembly and the first wall, where the thickness direction is perpendicular to the first direction;
a plurality of fans, each layer of air supply ports being provided with the fans; and
at least one partition plate assembly, disposed in the cavity and spaced apart in the first direction, where the partition plate assembly is provided with a partition position; at the partition position, the partition plate assembly partitions the cavity into a plurality of subspaces, the plurality of subspaces are arranged in the first direction, and each subspace is in communication with a corresponding layer of air supply ports.

In the above technical solutions, the condenser assembly is disposed on one side of the fan in the thickness direction and arranged opposite to the fan. In one aspect, the dimension of the heat exchange unit in the width direction is reduced, and the structural arrangement of the heat exchange unit is more compact and reasonable. In another aspect, the airflow in the external environment can be discharged under the action of the fan without reversing after heat exchange with the condenser assembly, and the airflow discharge path is short, which can reduce the load on the fan. In addition, the partition plate assembly partitions the cavity into a plurality of subspaces that are not in communication with each other at the partition position. The airflow after heat exchange can only flow in each respective subspace, and is discharged out of the housing under the action of the fan corresponding to each subspace. This can reduce the probability of turbulence in the airflow after heat exchange within the cavity due to the action of the fans at each layer, improve the uniformity of airflow circulation, and meanwhile, reduce the noise generated by the fans.

In some embodiments, the heat exchange system includes at least two independent refrigerant circuits, each refrigerant circuit is provided with a condenser, condensers on the refrigerant circuits are arranged in the first direction and form the condenser assembly, and one side of the condenser on a single refrigerant circuit corresponds to at least one layer of air supply ports.

In the above technical solutions, a plurality of independently operating refrigerant circuits are provided, and the condenser of each refrigerant circuit and the air supply ports of each layer are arranged in the same direction. In one aspect, the dimension of the heat exchange unit in the thickness direction is not increased, such that the structure of the heat exchange unit is more compact, and in another aspect, when a single refrigerant circuit operates or a plurality of refrigerant circuits operate simultaneously, the airflow after heat exchange can be discharged by means of the fan corresponding to each refrigerant circuit, thereby improving the heat exchange effect.

In some embodiments, an operating state of the heat exchange unit includes a full-power state; in the full-power state, the partition plate assembly is at the partition position, and each refrigerant circuit and each fan are in an operating state.

In the above technical solutions, in the full-power state, the airflows after heat exchange with the condensers flow in the subspaces that are not in communication with each other under the action of the partition plate assembly, such that the airflows do not interfere with each other, increasing the stability of airflow circulation and reducing the probability of turbulence. In addition, each fan only needs to generate a driving effect on the airflow in the corresponding subspace to discharge the airflow to the outside, reducing the rotation speed requirement for the fan, thereby reducing the load on the fan, and achieving energy saving and noise reduction.

In some embodiments, one end of the partition plate assembly is fixed on the condenser, and the other end thereof is fixed on the first wall; an operating state of the heat exchange unit includes a partial-power state; in the partial-power state, the partition plate assembly is at the partition position, part of the refrigerant circuits and corresponding fans are in an operating state, and the other part of the refrigerant circuits and corresponding fans are in a closed state.

In the above technical solutions, the partition plate assembly is in a stationary and fixed state relative to the housing and the condenser, and both ends of the partition plate assembly are respectively connected to the condenser and the first wall to partition the cavity between the condenser and the first wall into subspaces that are not in communication with each other, such that the airflows in the subspaces corresponding to the condensers on the refrigerant circuits do not circulate with each other, thereby increasing the uniformity of airflow flow. In the partial-power state, the subspace corresponding to the refrigerant circuit in an operating state and the subspace corresponding to the refrigerant circuit in a closed state are partitioned by the partition plate assembly, and the airflow after heat exchange only flows in the subspace corresponding to the refrigerant circuit in the operating state and is discharged to the outside under the action of the corresponding fan. The fan corresponding to the refrigerant circuit in a non-operating state does not rotate, which can reduce the influence of the fan corresponding to the refrigerant circuit in a non-operating state on the airflow in the subspace corresponding to the refrigerant circuit in an operating state, thereby increasing the stability of airflow circulation, and enhancing the operation reliability of the heat exchange unit in the partial-power state. In addition, energy can also be saved.

In some embodiments, the partition plate assembly is movably disposed in the cavity, the partition plate assembly is provided with a blocking position, and at the blocking position, one side of the condenser on at least one refrigerant circuit facing the fan is blocked by the partition plate assembly.

In the above technical solutions, at the blocking position, the partition plate assembly can block the condenser on at least one refrigerant circuit. Therefore, the airflow does not flow through the blocked condenser, such that the external airflow can flow through the unblocked condenser in a concentrated manner, thereby improving the condensation efficiency. In this case, the partition plate assembly does not partition the cavity, such that the airflow can only exchange heat with the unblocked condenser, and the airflow after heat exchange with the unblocked condenser can flow in the cavity and be discharged from each layer of air supply ports to the outside via the cavity. In this way, the air supply ports on the first wall can relatively uniformly supply air, improving the temperature uniformity on one side of the first wall facing away from the cavity. Meanwhile, the probability that the airflow delivered out via the air supply port flows back into the cavity is also reduced.

In some embodiments, an operating state of the heat exchange unit includes a partial-power state; in the partial-power state, the condensers of part of the refrigerant circuits are blocked by the partition plate assembly, all layers of air supply ports are in communication with each other, and each fan is in an operating state, such that airflow in the cavity is delivered out via each air supply port.

In the above technical solutions, in the partial-power state, the partition plate assembly blocks the condenser in a non-operating state, and the airflow can only exchange heat with the condenser in an operating state in a concentrated manner, thereby increasing the airflow utilization rate and the heat exchange effect. The airflow after heat exchange is discharged from the cavity under the combined action of the fans at the air supply ports of each layer, which can reduce the rotation speed of each fan, improve the operating efficiency of the heat exchange unit, and reduce the operating noise of the fans. Meanwhile, the temperature uniformity on one side of the first wall facing away from the cavity can also be improved, and the probability that the airflow delivered out via the air supply port flows back into the cavity can be reduced.

In some embodiments, one end of the partition plate assembly is rotatably connected to the condenser, and the other end thereof is a free end; the partition plate assembly swings about a rotating joint with the condenser.

In the above technical solutions, the partition plate assembly can switch between the partition position and the blocking position by rotation, and the switching method is simple and convenient, which can adapt to different operation requirements of the heat exchange unit and improve the operation reliability of the heat exchange unit.

In some embodiments, the partition plate assembly includes a driving mechanism, and the driving mechanism drives the partition plate assembly to rotate.

In the above technical solutions, the partition plate assembly is driven to switch between the partition position and the blocking position by the driving mechanism, such that the partition plate assembly can be relatively stable at both the partition position and the blocking position.

In some embodiments, the partition plate assembly includes a first plate and a second plate, the first plate and the second plate are stacked, the first plate is provided with a plurality of first through holes, the second plate is provided with a plurality of second through holes, and the first plate and the second plate are capable of sliding relative to each other, such that the partition plate assembly switches between a ventilation state and an air-blocking state;
in the ventilation state, the first through holes and the second through holes are at least partially aligned, such that the airflow is capable of flowing through the first through holes and the second through holes;
in the air-blocking state, the first through holes and the second through holes are present in a staggered manner, such that the second plate blocks the first through holes, and the first plate blocks the second through holes.

In the above technical solutions, by setting the ventilation state and the air-blocking state of the partition plate assembly, different operation modes of the partition plate assembly at the partition position and the blocking position are realized, such that the stable circulation of airflow is realized. When the partition plate assembly is at the partition position, the partition plate assembly is in the air-blocking state, such that the airflow can only be discharged from the corresponding fan via each respective subspace, improving the uniformity of airflow flow, reducing the requirement on the rotation speed of the fan, and achieving energy saving and noise reduction. When the partition plate assembly is at the blocking position, the airflow can only exchange heat with the unblocked condenser, enhancing the heat exchange effect; the airflow is discharged from each layer of subspace via the cavity, which can increase the airflow circulation efficiency and reduce the overall operating speed of the fan, thereby reducing the operating noise of the fan. In this way, the heat exchange unit has relatively good operating efficiency when the partition plate assembly is at different positions.

In some embodiments, one of the refrigerant circuits is a first refrigerant circuit, and the first refrigerant circuit is provided with a first condenser; the other refrigerant circuit is a second refrigerant circuit, and the second refrigerant circuit is provided with a second condenser; the first condenser corresponds to two layers of air supply ports, and the second condenser corresponds to one layer of air supply ports; a partition plate assembly connected to the first condenser is a first partition plate assembly, and a partition plate assembly connected to the second condenser is a second partition plate assembly;
in the partial-power state, the first refrigerant circuit is in an operating state, the second partition plate assembly is in the air-blocking state and blocks the second condenser, one end of the first partition plate assembly distal to the first condenser abuts against the first wall, and the first partition plate assembly is in the ventilation state.

In the above technical solutions, the second partition plate assembly is at the blocking position, the free end of the second partition plate assembly rotates clockwise in the circumferential direction to block the second condenser, and the second partition plate assembly is in the air-blocking state; the airflow cannot be in contact with the second condenser by means of the second partition plate assembly, and the airflow can only exchange heat with the first condenser; the free end of the first partition plate assembly abuts against the first wall, and the first partition plate assembly is in the ventilation state, such that the airflows in the cavity can circulate with each other; the fans at the air supply port corresponding to the first condenser and the fans at the air supply port corresponding to the second condenser both operate, and the airflow in the cavity is discharged by means of the fans at all layers. The air supply ports on the first wall relatively uniformly supply air, such that the temperature uniformity on one side of the first wall facing away from the cavity is good, and the probability of airflow backflow is low.

In some embodiments, one of the refrigerant circuits is a first refrigerant circuit, and the first refrigerant circuit is provided with a first condenser; the other refrigerant circuit is a second refrigerant circuit, and the second refrigerant circuit is provided with a second condenser; the first condenser corresponds to two layers of air supply ports, and the second condenser corresponds to one layer of air supply ports; a partition plate assembly connected to the first condenser is a first partition plate assembly, and a partition plate assembly connected to the second condenser is a second partition plate assembly;
in the partial-power state, the second refrigerant circuit is in an operating state, the first partition plate assembly and the second partition plate assembly jointly block the first condenser, and the first partition plate assembly and the second partition plate assembly are in the air-blocking state.

In the above technical solutions, the first partition plate assembly and the second partition plate assembly are at the blocking position, the free end of the first partition plate assembly rotates counterclockwise in the circumferential direction, the free end of the second partition plate assembly rotates counterclockwise in the circumferential direction, the first partition plate assembly and the second partition plate assembly jointly block the first condenser, and the first partition plate assembly and the second partition plate assembly are in the air-blocking state; the airflow cannot be in contact with the first condenser by means of the first partition plate assembly and the second partition plate assembly, the airflow can only exchange heat with the second condenser, and the airflows circulate with each other in the cavity; the fans at the air supply port corresponding to the first condenser and the fans at the air supply port corresponding to the second condenser both operate, and the airflow in the cavity is discharged by means of the fans at all layers. The air supply ports on the first wall relatively uniformly supply air, such that the temperature uniformity on one side of the first wall facing away from the cavity is good, and the probability of airflow backflow is low.

A second aspect of the present disclosure provides an energy storage device. The energy storage device includes:
a battery pack;
a coolant liquid loop, where the coolant liquid loop flows through a cold plate in the battery pack;
and the heat exchange unit according to the first aspect, where the heat exchange system is provided with an evaporator, and the coolant liquid loop exchanges heat with the evaporator.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present disclosure. Throughout all the drawings, the same components are denoted by the same reference numerals. In the drawings:
FIG. 1 is a schematic structural diagram of a heat exchange unit according to a first embodiment of the present disclosure, where one end of a partition plate assembly is fixedly connected to a condenser, and the other end of the partition plate assembly is fixedly connected to a first wall;
FIG. 2 is a schematic structural diagram of a heat exchange unit according to an embodiment of the present disclosure from another perspective;
FIG. 3 is a schematic diagram of operation of an energy storage device according to an embodiment of the present disclosure;
FIG. 4 is a schematic structural diagram of a heat exchange unit according to a second embodiment of the present disclosure, where a partition plate assembly is rotatably connected to a condenser;
FIG. 5 is a schematic structural diagram of the heat exchange unit according to the second embodiment of the present disclosure in a partial-power state;
FIG. 6 is another schematic structural diagram of the heat exchange unit according to the second embodiment of the present disclosure in a partial-power state;
FIG. 7 is a schematic structural diagram of a partition plate assembly according to an embodiment of the present disclosure, where the partition plate assembly is in a ventilation state;
FIG. 8 is another schematic structural diagram of a partition plate assembly according to an embodiment of the present disclosure, where the partition plate assembly is in an air-blocking state; and
FIG. 9 is a schematic diagram of cooperation between a partition plate assembly, a driving mechanism, a gear mechanism, and a pull rod structure according to an embodiment of the present disclosure.

### Description of the reference numerals:

1-heat exchange unit;
10-housing; 10a-first wall; 10b-air supply port; 1a-cavity; 1b-subspace; 11-condenser assembly; 111-first condenser; 112-second condenser; 12-fan; 13-partition plate assembly; 131-first plate; 131a-first through hole; 132-second plate; 132a-second through hole; 13'-first partition plate assembly; 13''-second partition plate assembly; 14-driving mechanism; 15-gear mechanism; 16-pull rod structure.

### DETAILED DESCRIPTION

The following describes in detail embodiments of technical solutions of the present disclosure with reference to the drawings. The following embodiments are merely used to more clearly illustrate the technical solutions of the present disclosure, and therefore, are only exemplary and do not limit the protection scope of the present disclosure.

Unless otherwise defined, all technical and scientific terms used herein have the same meanings as commonly understood by those skilled in the technical field to which the present disclosure belongs. The terms used herein are only used to illustrate the specific embodiments, rather than limit the present disclosure. The terms "include", "comprise", "have", "provided with", and any variants thereof, in the specification and claims of the present disclosure and the above description of the drawings are intended to cover non-exclusive inclusions.

In the description of the embodiments of the present disclosure, the technical terms "first", "second", "third", and the like are merely intended to distinguish different objects and should not be understood as any indication or implication of relative importance or any implicit indication of the number, specific sequence, or primary-secondary relationship of the technical features indicated. In the description of the embodiments of the present disclosure, unless otherwise specifically defined, "plurality of" means two or more.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present disclosure, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present disclosure, the technical terms "length", "width", "thickness", "upper", "lower", "front", "rear", "left", "right", "vertical", "horizontal", "top", "bottom", "inner", "outer", "circumferential", and the like indicate orientations or positional relationships based on those shown in the drawings. They are merely for the convenience of describing the embodiments of the present disclosure and simplifying the description, rather than indicating or implying that the device or element referred to must have a specific orientation or be constructed, operated, or used in the specific orientation, and thus should not be construed as a limitation to the embodiments of the present disclosure.

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and defined, the technical term "contact" should be interpreted in a broad sense. For example, the "contact" may be direct contact, or contact through an intermediate medium layer, or contact without an interaction force between two contacting elements, or contact with an interaction force between two contacting elements.

The present disclosure is described in detail below.

Since the energy required by people has strong temporal and spatial characteristics, to reasonably use the energy and improve the utilization rate of the energy, it is necessary to use a device to collect and store the excess energy temporarily not used for a certain period of time in a certain manner, and release and utilize the energy at a specific time or a specific location to improve the utilization rate of the energy. In this case, an energy storage device emerges. An energy storage device is a device that stores electric energy or other energy sources. Taking electric energy as an example, in some remote areas with no power grid access, it is often difficult to obtain a stable supply of electric power. In this environment, the existence of energy storage devices is particularly important, as they can provide electric energy required for daily life or experimental production.

The energy storage device may be provided with an energy storage compartment, the energy storage compartment accommodates a battery pack therein, and battery cells in the battery pack usually generate a large amount of heat during use. Therefore, the energy storage device is provided with a heat exchange unit and a coolant liquid loop. The heat exchange unit may exchange heat with the coolant liquid loop by means of a heat exchange loop to absorb at least part of the heat in the coolant liquid, and the cooled coolant liquid cools the battery cells to reduce the risk of excessively high temperature of the battery cells. The energy storage compartment may be an energy storage container or an energy storage unit in the energy storage container, and the heat exchange unit may be disposed independently of the energy storage compartment. When the energy storage compartment is an energy storage container, the heat exchange unit may be located outside the energy storage container and operate as an independent module. When the energy storage compartment is an energy storage unit in the energy storage container, the heat exchange unit may operate as a module in the energy storage container.

In the related art, a heat exchange unit includes a housing, fans, and condensers. The condensers are disposed on both sides of the fan, and a plurality of fans are mounted on the outer wall surface of the housing in at least two columns or two rows. The airflow in the external environment enters the housing to exchange heat with the condensers and is then discharged by means of the fans. In one aspect, the condensers disposed on both sides of the fan will lengthen the airflow outflow path and increase the resistance to the airflow being discharged from the housing, thereby increasing the load on the fans and increasing the dimension of the heat exchange unit in the width direction. In another aspect, when the airflow subjected to heat exchange by means of the condenser is discharged from the housing under the driving effect of a plurality of rows or columns of fans, turbulence is prone to occur, affecting the uniformity of airflow circulation.

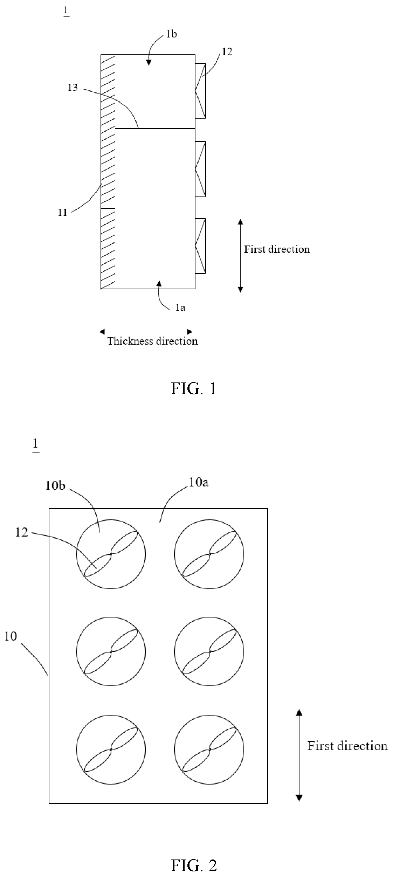

Therefore, referring to FIGs. 1 to 9, the embodiments of the present disclosure provide a heat exchange unit 1.

The heat exchange unit 1 includes a housing 10, a heat exchange system, a plurality of fans 12, and at least one partition plate assembly 13. The housing 10 is provided with a first wall 10a, the first wall 10a is provided with a plurality of layers of air supply ports 10b, the plurality of layers of air supply ports 10b are spaced apart in a first direction, and each layer of air supply ports 10b is provided with a fan 12.

The heat exchange system is provided with a condenser assembly 11. The condenser assembly 11 is disposed on one side of the first wall 10a in a thickness direction, and a cavity 1a is defined between the two, where the thickness direction is perpendicular to the first direction.

At least one partition plate assembly 13 is disposed in the cavity 1a and spaced apart in the first direction, and the partition plate assembly 13 is provided with a partition position. At the partition position, the partition plate assembly 13 partitions the cavity 1a into a plurality of subspaces 1b. The plurality of subspaces 1b are disposed in the first direction, and each subspace 1b is in communication with a corresponding layer of air supply ports 10b.

The embodiments of the present disclosure provide an energy storage device. The energy storage device includes a battery pack, a coolant liquid loop, and the heat exchange unit 1 according to any one of the embodiments of the present disclosure. The coolant liquid loop flows through a cold plate in the battery pack, the heat exchange system is provided with an evaporator, and the coolant liquid loop exchanges heat with the evaporator.

The battery pack is formed by a collection of a plurality of battery sets. The battery pack is configured to store electric energy and includes battery cells, a battery management system (BMS), a heat dissipation system, a housing, and the like. The BMS is an intelligent control system in the battery pack, and can monitor parameters such as the voltage, temperature, and current of the battery set, and manage and protect the battery based on these parameters. The BMS can also control the charging and discharging process of the battery, thereby improving the safety and stability of the battery.

The battery cell may be a secondary battery, which refers to a battery cell that can continue to be used by activating the active material through charging after the battery cell is discharged. In the battery pack, one or a plurality of battery cells may be provided. If a plurality of battery cells are provided, the plurality of battery cells may be connected in series, in parallel, or in series-parallel. The series-parallel connection means that both series connection and parallel connection are present for the connection among the plurality of battery cells.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present disclosure.

The heat exchange system is a system that performs a heat exchange cycle by using a refrigerant, the condenser assembly 11 is configured to cool the refrigerant, and the evaporator is configured to heat the refrigerant. The heat exchange system further includes a compressor, and the compressor is configured to compress the refrigerant. The compressor is provided with an intake port and a venting port, the compressor sucks the refrigerant at a low temperature and a low air pressure from the intake port, a piston is driven to compress the refrigerant by means of the operation of a motor, and the refrigerant after the temperature rise and pressure rise is output from the venting port.

The coolant liquid loop is a system that performs a heat exchange cycle by using a coolant liquid. The coolant liquid in the coolant liquid loop exchanges heat with the evaporator to dissipate heat, thereby exchanging heat with the cold plate in the battery pack to implement cooling of the battery cells.

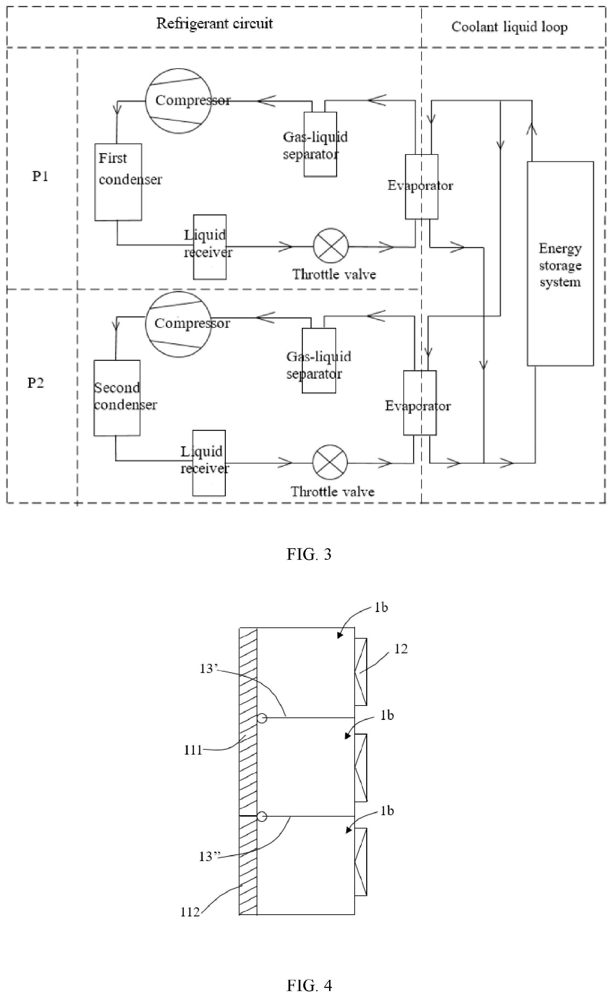

Specifically, referring to FIG. 3, the refrigerant output from the venting port of the compressor, after being condensed by the condenser assembly 11, flows to the evaporator. Two pipelines are provided in the evaporator, one for the refrigerant to flow and the other for the coolant liquid to flow. The refrigerant and the coolant liquid exchange heat in the evaporator, and the refrigerant absorbs at least part of the heat in the coolant liquid to cool the coolant liquid. The coolant liquid with reduced temperature flows to the cold plate in the battery pack from the evaporator to cool the battery cells.

It can be understood that the refrigerant and the coolant liquid exchange heat only in the evaporator, and the refrigerant and the coolant liquid do not come into contact with each other. That is, the refrigerant does not flow to the coolant liquid loop, and the coolant liquid does not flow to the heat exchange loop of the heat exchange system. After the heat exchange between the refrigerant and the coolant liquid is completed, the refrigerant flows out of the evaporator toward the intake port of the compressor, and the coolant liquid flows out of the evaporator toward the cold plate of the battery pack.

It can be understood that the condenser assembly 11 may be formed by one condenser or a combination of a plurality of condensers.

It should be noted that the refrigerant, also known as cooling medium, is a medium substance used to complete a heat exchange cycle in a heat exchange system. For example, the refrigerant may be Freon. The coolant liquid is a cooling medium of a coolant liquid loop, and is mainly composed of water, antifreeze, and additives. For example, the coolant liquid may be ethylene glycol.

The fan 12 is configured to generate a driving force to drive airflow to be discharged from the air supply port 10b. The cavity 1a is a space between the condenser assembly 11 and the first wall 10a for the airflow to circulate. Specifically, when the condenser assembly 11 operates, the airflow in the external environment passes through the surface of the condenser assembly 11, exchanges heat with the condenser assembly 11, and then is discharged from the air supply port 10b via the cavity 1a under the action of the fan 12.

The first direction is perpendicular to the thickness direction. For example, the first direction may be a height direction or a width direction. The condenser assembly 11 is arranged on one side of the fan 12 in the thickness direction, such that the condenser assembly 11 can be arranged opposite to the fan 12. After heat exchange between the airflow in the external environment and the condenser assembly 11 is completed, there is no need for reversing. The airflow can be discharged from the housing 10 via the air supply port 10b along the cavity 1a under the action of the fan 12, thereby reducing the load on the fan 12.

It can be understood that the size of the cavity 1a can be reduced to shorten the distance between the condenser assembly 11 and the fan 12, thereby further shortening the airflow inlet and outlet path and further reducing the load on the fan 12.

It should be noted that the plurality of layers of air supply ports 10b being spaced apart in the first direction means that the layers of air supply ports 10b are arranged on the first wall 10a in the first direction, and the dimensions of each layer of air supply ports 10b on the first wall 10a in the first direction may be the same or different. For example, in some embodiments, the first direction is the height direction, the plurality of layers of air supply ports 10b are arranged in the height direction, the dimensions of each layer of air supply ports 10b on the first wall 10a in the height direction are the same, and each layer of air supply ports 10b is located above or below an adjacent layer of air supply ports 10b. In some other embodiments, the first direction is the width direction, the plurality of layers of air supply ports 10b are arranged in the width direction, the dimensions of each layer of air supply ports 10b on the first wall 10a in the width direction are the same, and each layer of air supply ports 10b is located on the left or right side of an adjacent layer of air supply ports 10b.

It should be noted that each layer may be provided with only one air supply port 10b or a plurality of air supply ports 10b. In this way, each layer of air supply port(s) 10b may be provided with one fan 12 or a plurality of fans 12, and the fans 12 are in a one-to-one correspondence with the air supply ports 10b. For example, referring to FIG. 2, in some embodiments of the present disclosure, the first wall 10a is provided with three layers of air supply ports 10b, and each layer of air supply ports 10b is provided with two air supply ports 10b.

The partition plate assembly 13 is disposed in the cavity 1a. That is, the partition plate assembly 13 is disposed between the fan 12 and the condenser assembly 11. At the partition position, the partition plate assembly 13 partitions the cavity 1a into a plurality of subspaces 1b, and each subspace 1b is in communication with the corresponding layer of air supply ports 10b; that is, the airflow in each subspace 1b can be discharged out of the housing 10 by means of the fan 12 disposed at the corresponding air supply port 10b.

It should be noted that the plurality of subspaces 1b are not in communication with each other; that is, airflows in the subspaces 1b do not circulate with each other.

One or a plurality of partition plate assemblies 13 may be provided, which is not limited herein.

According to the heat exchange unit 1 provided in the embodiments of the present disclosure, the condenser assembly 11 is disposed on one side of the fan 12 in the thickness direction and arranged opposite to the fan 12. In one aspect, the dimension of the heat exchange unit 1 in the width direction is reduced, and the structural arrangement of the heat exchange unit 1 is more compact and reasonable. In another aspect, the airflow in the external environment can be discharged under the action of the fan 12 without reversing after heat exchange with the condenser assembly 11, and the airflow discharge path is short, which can reduce the load on the fan 12. In addition, the partition plate assembly 13 partitions the cavity 1a into a plurality of subspaces 1b that are not in communication with each other at the partition position. The airflow after heat exchange can only flow in each respective subspace 1b, and is discharged out of the housing 10 under the action of the fan 12 corresponding to each subspace 1b. This can reduce the probability of turbulence in the airflow after heat exchange within the cavity 1a due to the action of the fans 12 at each layer, improve the uniformity of airflow circulation, and meanwhile, reduce the noise generated by the fans 12.

The specific configuration of the heat exchange system is not limited.

In some embodiments, the heat exchange system includes at least two independent refrigerant circuits, each refrigerant circuit is provided with a condenser, the condensers on the refrigerant circuits are arranged in the first direction and form the condenser assembly 11, and one side of the condenser on a single refrigerant circuit corresponds to at least one layer of air supply ports 10b.

It should be noted that the at least two independent refrigerant circuits mean that a plurality of refrigerant circuits can operate independently at the same time and do not interfere with each other. Certainly, the situation may be that part of the refrigerant circuits operates and the other part of the refrigerant circuits does not operate.

In the embodiments, a plurality of independently operating refrigerant circuits are provided, and the condenser of each refrigerant circuit and the air supply ports 10b of each layer are arranged in the same direction. In one aspect, the dimension of the heat exchange unit 1 in the thickness direction is not increased, such that the structure of the heat exchange unit 1 is more compact, and in another aspect, when a single refrigerant circuit operates or a plurality of refrigerant circuits operate simultaneously, the airflow after heat exchange can be discharged by means of the fan 12 corresponding to each refrigerant circuit, thereby improving the heat exchange effect.

It can be understood that one side of the condenser on a single refrigerant circuit corresponds to at least one layer of air supply ports 10b, which may be that one side of the condenser on a single refrigerant circuit corresponds to one layer of air supply ports 10b, or that one side of the condenser on a single refrigerant circuit corresponds to two or more layers of air supply ports 10b.

It can be understood that each refrigerant circuit is provided with a compressor and an evaporator to complete the heat exchange cycle of each refrigerant circuit. Certainly, each refrigerant circuit may also be provided with a liquid receiver, a gas-liquid separator, a throttle valve, and the like.

For example, referring to FIG. 3, the venting port of the compressor, the condenser, the liquid receiver, the throttle valve, the evaporator, the gas-liquid separator, and the intake port of the compressor are connected in series to form the refrigerant circuit, the refrigerant flows to the condenser via the venting port of the compressor for heat exchange, and the liquid receiver can adjust and stabilize the circulation amount of the refrigerant in the refrigerant circuit. When the supply amount of the refrigerant needs to be increased, the liquid receiver can increase the supply of the refrigerant and increase the amount of the refrigerant flowing to the throttle valve, and when the supply amount of the refrigerant needs to be decreased, the liquid receiver can store part of the refrigerant to reduce the amount of the refrigerant flowing to the throttle valve. The throttle valve can perform flow control on the refrigerant flowing to the evaporator, the refrigerant exchanges heat in the evaporator with the coolant liquid in the coolant liquid loop flowing through the evaporator, and the refrigerant flowing out of the evaporator has the liquid-phase refrigerant filtered out by the gas-liquid separator, such that the refrigerant entering the intake port of the compressor is a gas phase refrigerant, which increases the stability of circulation of the refrigerant circuit.

When the partition plate assembly 13 is at the partition position, the operating state of the heat exchange unit 1 has various situations.

For example, in some embodiments, the heat exchange unit 1 includes a full-power state; in the full-power state, the partition plate assembly 13 is at the partition position, and each refrigerant circuit and each fan 12 are in an operating state.

It can be understood that in the embodiments, the full-power state of the heat exchange unit 1 is that all the refrigerant circuits of the heat exchange unit 1 operate simultaneously, and in this case, the operating power of the heat exchange unit 1 is the sum of the operating powers of all the refrigerant circuits.

Specifically, at the partition position, the partition plate assembly 13 partitions the cavity 1a into a plurality of subspaces 1b that are not in communication with each other. Each condenser is in the operating state, and the airflow in the external environment passes through the surface of each condenser to complete heat exchange with each condenser and then flows in the corresponding subspace 1b, and flows from the subspace 1b to the outside under the driving effect of the fan 12 corresponding to each subspace 1b.

In the embodiments, in the full-power state, the airflows after heat exchange with the condensers flow in the subspaces 1b that are not in communication with each other under the action of the partition plate assembly 13, such that the airflows do not interfere with each other, increasing the uniformity of airflow circulation and reducing the probability of turbulence. In addition, each fan 12 only needs to generate a driving effect on the airflow in the corresponding subspace 1b to discharge the airflow to the outside, reducing the rotation speed requirement for the fan 12, thereby reducing the load on the fan 12, and achieving energy saving and noise reduction.

It can be understood that at the partition position, one side of the condenser on a single refrigerant circuit corresponds to at least one subspace 1b.

For example, in some embodiments, referring to FIG. 1, one end of the partition plate assembly 13 is fixed on the condenser, and the other end thereof is fixed on the first wall 10a.

That is, in the embodiments, the partition plate assembly 13 is in a stationary and fixed state relative to the housing 10 and the condenser, and both ends of the partition plate assembly 13 are respectively connected to the condenser and the first wall 10a to partition the cavity 1a between the condenser and the first wall 10a into subspaces 1b that are not in communication with each other, such that the airflows in the subspaces 1b corresponding to the condensers on the refrigerant circuits do not circulate with each other, thereby increasing the uniformity of airflow flow. That is, in the embodiments, the partition plate assembly 13 is only provided with the partition position.

The operating state of the heat exchange unit 1 includes a partial-power state. In the partial-power state, the partition plate assembly 13 is at the partition position, part of the refrigerant circuits and the corresponding fans 12 are in an operating state, and the other part of the refrigerant circuits and the corresponding fans 12 are in a closed state.

It can be understood that in the embodiments, the partial-power state of the heat exchange unit 1 is that part of the refrigerant circuits of the heat exchange unit 1 is in the operating state and the other part of the refrigerant circuits is in a non-operating state. In this case, the operating power of the heat exchange unit 1 is the operating power of the refrigerant circuits in the operating state.

Specifically, at the partition position, the partition plate assembly 13 partitions the cavity 1a into a plurality of subspaces 1b that are not in communication with each other. The refrigerant circuit in the operating state exchanges heat with the airflow in the external environment, and the airflow after heat exchange flows in the subspace 1b corresponding to the refrigerant circuit in the operating state, and then flows from the subspace 1b to the outside under the driving effect of the fan 12 corresponding to the condenser of the refrigerant circuit in the operating state. In the subspace 1b corresponding to the refrigerant circuit in the closed state, no airflow flows, and the corresponding fan 12 does not rotate.

In the embodiments, in the partial-power state, the subspace 1b corresponding to the refrigerant circuit in an operating state and the subspace 1b corresponding to the refrigerant circuit in a closed state are partitioned by the partition plate assembly 13, and the airflow after heat exchange only flows in the subspace 1b corresponding to the refrigerant circuit in the operating state and is discharged to the outside under the action of the corresponding fan 12. The fan 12 corresponding to the refrigerant circuit in a non-operating state does not rotate, which can reduce the influence of the fan 12 corresponding to the refrigerant circuit in a non-operating state on the airflow in the subspace 1b corresponding to the refrigerant circuit in an operating state, thereby increasing the stability of airflow circulation, and enhancing the operation reliability of the heat exchange unit 1 in the partial-power state. In addition, energy can also be saved.

The partition plate assembly 13 may only be provided with the partition position, or the partition plate assembly 13 may be provided with both the partition position and other positions.

For example, in some embodiments, the partition plate assembly 13 is movably disposed within the cavity 1a, the partition plate assembly 13 is provided with a blocking position, and at the blocking position, one side of the condenser on at least one refrigerant circuit facing the fan 12 is blocked by the partition plate assembly 13.

In the embodiments, at the blocking position, the partition plate assembly 13 can block the condenser on at least one refrigerant circuit. Therefore, the airflow does not flow through the blocked condenser, such that the external airflow can flow through the unblocked condenser in a concentrated manner, thereby improving the condensation efficiency. In this case, the partition plate assembly 13 does not partition the cavity 1a, such that the airflow can only exchange heat with the unblocked condenser, and the airflow after heat exchange with the unblocked condenser can flow in the cavity 1a and be discharged from each layer of air supply ports 10b to the outside via the cavity 1a. In this way, the air supply ports 10b on the first wall 10a can relatively uniformly supply air, improving the temperature uniformity on the outer side of the first wall 10a facing away from the side where the cavity 1a is located. Meanwhile, the probability that the airflow on the outer side of the first wall 10a facing away from the side where the cavity 1a is located flows back into the cavity 1a via part of the air supply ports 10b can also be reduced.

It can be understood that when the partition plate assembly 13 is in the blocking position, the heat exchange unit 1 only has a partial-power operating state, and in this case, the operating mode of the heat exchange unit 1 is not limited.

In some embodiments, in the partial-power state, the condensers of part of the refrigerant circuits are blocked by the partition plate assembly 13, all layers of air supply ports 10b are in communication with each other, and each fan 12 is in the operating state, such that the airflow in the cavity 1a is delivered out via each air supply port 10b.

Specifically, the condenser of the refrigerant circuit in the non-operating state is blocked by the partition plate assembly 13, and the condenser of the refrigerant circuit that is not blocked by the partition plate assembly 13 is in the operating state. The airflow in the external environment exchanges heat with the unblocked condenser, and then circulates in the cavity 1a. The fan 12 disposed at each layer of air supply ports 10b corresponding to the cavity 1a is in an operating state, such that the airflow in the cavity 1a is delivered out via each layer of air supply ports 10b. It can be understood that the fan 12 corresponding to the condenser in the non-operating state is in the operating state.

In the embodiments, in the partial-power state, the partition plate assembly 13 blocks the condenser in a non-operating state, and the airflow can only exchange heat with the condenser in an operating state in a concentrated manner, thereby increasing the airflow utilization rate and the heat exchange effect. The airflow after heat exchange is discharged from the cavity 1a under the combined action of the fans 12 at the air supply ports 10b of each layer, which can reduce the rotation speed of each fan 12, improve the operating efficiency of the heat exchange unit 1, and reduce the operating noise of the fans 12. Meanwhile, the temperature uniformity on one side of the first wall 10a facing away from the cavity 1a can also be improved, and the probability that the airflow delivered out via the air supply port 10b flows back into the cavity 1a can be reduced.

The method for switching the partition plate assembly 13 between the partition position and the blocking position is not limited.

For example, referring to FIG. 4, in some embodiments, one end of the partition plate assembly 13 is rotatably connected to the condenser, and the other end thereof is a free end; the partition plate assembly 13 swings about a rotating joint with the condenser.

It can be understood that at the partition position, the free end of the partition plate assembly 13 abuts against the first wall 10a, such that both ends of the partition plate assembly 13 can be supported by force, the stability of each subspace 1b is increased, and the operation reliability of the partition plate assembly 13 at the partition position is improved.

The rotating joint between the partition plate assembly 13 and the condenser is the rotation center of the partition plate assembly 13. When the partition plate assembly needs to switch from the partition position to the blocking position, the partition plate assembly 13 rotates about the rotation center, and the free end of the partition plate assembly 13 rotates clockwise or counterclockwise in the circumferential direction toward the side proximal to the condenser until one side of the condenser facing the fan 12 is blocked, such that the partition plate assembly 13 switches from the partition position to the blocking position. Certainly, if the partition plate assembly 13 needs to switch from the blocking position to the partition position, the free end of the partition plate assembly 13 rotates toward the side proximal to the first wall 10a until the partition plate assembly abuts against the first wall 10a. In this way, the switching of the partition plate assembly 13 from the blocking position to the partition position is completed.

In the embodiments, the partition plate assembly 13 can switch between the partition position and the blocking position by rotation, and the switching method is simple and convenient, which can adapt to different operation requirements of the heat exchange unit 1 and improve the operation reliability of the heat exchange unit 1.

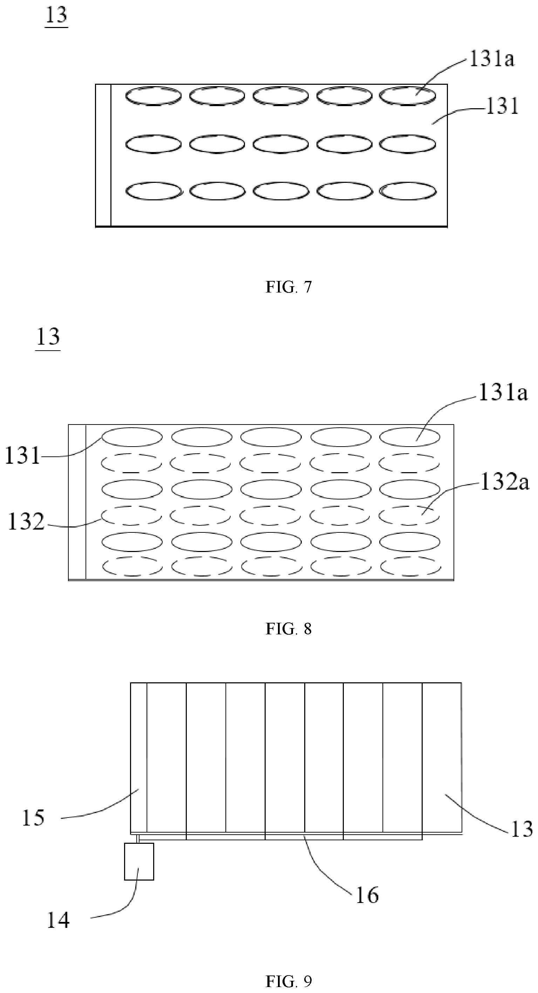

In some embodiments, referring to FIG. 9, the heat exchange unit 1 includes a driving mechanism 14, and the driving mechanism 14 drives the partition plate assembly 13 to rotate.

The partition plate assembly 13 is driven to switch between the partition position and the blocking position by the driving mechanism 14, such that the partition plate assembly 13 can be relatively stable at both the partition position and the blocking position.

The specific structure of the driving mechanism 14 is not limited. For example, the driving mechanism 14 may be a motor.

The driving mechanism 14 may be directly connected to the partition plate assembly 13 to drive the partition plate assembly 13 to rotate, or the driving mechanism 14 may be indirectly connected to the partition plate assembly 13 to indirectly drive the partition plate assembly 13 to rotate.

For example, in some embodiments, referring to FIG. 9, the heat exchange unit 1 includes a gear mechanism 15, the power output shaft of the driving mechanism 14 is connected to the gear mechanism 15, the gear mechanism 15 is connected to the partition plate assembly 13, and the driving mechanism 14 drives the partition plate assembly 13 to rotate by means of the gear assembly, so as to achieve the switching of the partition plate assembly 13 between the partition position and the blocking position.

The specific configuration of the partition plate assembly 13 is not limited.

For example, in some embodiments, referring to FIGs. 7 and 8, the partition plate assembly 13 includes a first plate 131 and a second plate 132. The first plate 131 and the second plate 132 are stacked, the first plate 131 is provided with a plurality of first through holes 131a, the second plate 132 is provided with a plurality of second through holes 132a, and the first plate 131 and the second plate 132 are capable of sliding relative to each other, such that the partition plate assembly 13 switches between a ventilation state and an air-blocking state.

In the ventilation state, referring to FIG. 7, the first through holes 131a and the second through holes 132a are at least partially aligned, such that the airflow is capable of flowing through the first through holes 131a and the second through holes 132a.

In the air-blocking state, referring to FIG. 8, the first through holes 131a and the second through holes 132a are present in a staggered manner, such that the second plate 132 blocks the first through holes 131a, and the first plate 131 blocks the second through holes 132a.

It should be noted that the first plate 131 and the second plate 132 being stacked means that the plate surface of the first plate 131 is arranged substantially parallel to the plate surface of the second plate 132. At the partition position, the first plate 131 and the second plate 132 are stacked in the first direction. The first through holes 131a penetrate through the first plate 131 in the first direction, and the second through holes 132a penetrate through the second plate 132 in the first direction.

It can be understood that in the ventilation state, the first through holes 131a on the first plate 131 are in communication with the second through holes 132a on the second plate 132. That is, the airflow can pass through the partition plate assembly 13 to achieve communication within the cavity 1a. In the air-blocking state, the first plate 131 blocks the second through holes 132a of the second plate 132, the second plate 132 blocks the first through holes 131a of the first plate 131, and the airflow cannot pass through the partition plate assembly 13.

Specifically, when the partition plate assembly 13 is at the partition position, the partition plate assembly 13 is in the air-blocking state, such that the subspaces 1b are not in communication with each other, and the airflow can only flow in the respective subspaces 1b partitioned by the partition plate assembly 13 without interfering with each other, and is discharged under the action of the fans 12 corresponding to the subspaces 1b. In this case, the partition plate assembly 13 may be in the full-power state or the partial-power state. When the partition plate assembly 13 is at the blocking position, the partition plate assembly 13 blocking the condenser is in the air-blocking state, such that the airflow cannot pass through the partition plate assembly 13 to be in contact with the blocked condenser. The condenser in the operating state is not blocked by the partition plate assembly 13, and the partition plate assembly 13 not blocking the condenser is in the ventilation state, such that the airflow can pass through the partition plate assembly 13 to circulate in the entire cavity 1a, and is discharged under the action of the fans 12 disposed at the air supply ports 10b of each layer.

In the embodiments, by setting the ventilation state and the air-blocking state of the partition plate assembly 13, different operation modes of the partition plate assembly 13 at the partition position and the blocking position are realized, such that the stable circulation of airflow is realized. When the partition plate assembly 13 is at the partition position, the partition plate assembly 13 is in the air-blocking state, such that the airflow can only be discharged from the corresponding fan 12 via each respective subspace 1b, improving the uniformity of airflow flow, reducing the requirement on the rotation speed of the fan 12, and achieving energy saving and noise reduction. When the partition plate assembly 13 is at the blocking position, the airflow can only exchange heat with the unblocked condenser, enhancing the heat exchange effect; the airflow is discharged from each layer of subspace 1b via the cavity 1a, which can increase the airflow circulation efficiency and reduce the overall operating speed of the fan 12, thereby reducing the operating noise of the fan 12. In this way, the heat exchange unit 1 has relatively good operating efficiency when the partition plate assembly 13 is at different positions.

The method for realizing the relative sliding of the first plate 131 and the second plate 132 is not limited.

For example, in some examples, the partition plate assembly 13 can realize the relative sliding of the first plate 131 and the second plate 132 by means of the driving mechanism 14, such that the partition plate assembly 13 can switch between the air-blocking state and the ventilation state.

The driving mechanism 14 may be directly connected to the partition plate assembly 13 to drive the first plate 131 and the second plate 132 to slide relative to each other, or the driving mechanism 14 may be indirectly connected to the partition plate assembly 13 to drive the first plate 131 and the second plate 132 to slide relative to each other.

For example, in some embodiments, referring to FIG. 9, the heat exchange unit 1 further includes a pull rod structure 16, the driving mechanism 14 is connected to the pull rod structure 16, the pull rod structure 16 is connected to the partition plate assembly 13, and the driving mechanism 14 realizes the relative sliding of the first plate 131 and the second plate 132 by means of the pull rod structure 16, thereby realizing the switching of the partition plate assembly 13 between the air-blocking state and the ventilation state. Specifically, one end of the pull rod structure 16 is connected to the driving mechanism 14, and the other end thereof is connected to the first plate 131. The air-blocking state of the partition plate assembly 13 is used as the initial state. In this case, the first through holes 131a of the first plate 131 and the second through holes 132a of the second plate 132 are present in a staggered manner, and when it is necessary to switch to the ventilation state, the driving mechanism 14 drives the pull rod structure 16 to move, thereby driving the first plate 131 to move to the position where the first through holes 131a and the second through holes 132a are at least partially aligned, so as to realize the switching from the air-blocking state to the ventilation state.

In this way, in the present disclosure, a single driving mechanism 14 can not only realize the switching of the partition plate assembly 13 between the partition position and the blocking position, but also realize the switching of the partition plate assembly 13 between the air-blocking state and the ventilation state. Therefore, the driving method is simple, and the operating cost of the heat exchange unit 1 is reduced.

Certainly, the switching between the ventilation state and the air-blocking state can also be realized by other methods. For example, in some other embodiments, the heat exchange unit 1 may include a spring, a permanent magnet, and an electromagnet. The electromagnet is fixed on the first plate 131, the permanent magnet is fixed on the second plate 132, and the spring connects the electromagnet and the permanent magnet. The air-blocking state of the partition plate assembly 13 is used as the initial state. When the partition plate assembly 13 needs to switch from the air-blocking state to the ventilation state, the electromagnet is energized, a magnetic moment is generated between the electromagnet and the permanent magnet to drive the second plate 132 to move to the position where at least part of the second through holes 132a is aligned with the first through holes 131a, and in this case, the spring is deformed under force. When it is necessary to switch from the ventilation state to the air-blocking state, the electromagnet is de-energized, and the second plate 132 moves in the opposite direction under the reset action of the spring to the initial state.

Hereinafter, the operating mode of the heat exchange unit 1 in the present disclosure will be briefly described with the number of the refrigerant circuits being two.

For ease of description, one of the refrigerant circuits is denoted as a first refrigerant circuit, a condenser on the first refrigerant circuit is denoted as a first condenser 111, the other refrigerant circuit is denoted as a second refrigerant circuit, and a condenser on the second refrigerant circuit is denoted as a second condenser 112. The first condenser 111 and the second condenser 112 jointly form a condenser assembly 11, the first condenser 111 corresponds to two layers of air supply ports 10b, the second refrigerant circuit corresponds to one layer of air supply ports 10b, and each layer of air supply ports 10b is provided with two fans 12. A first partition plate assembly 13' is connected to the first condenser 111, and a second partition plate assembly 13" is connected to the second condenser 112.

First embodiment: Referring to FIG. 1, one end of the first partition plate assembly 13' is fixedly connected to the first condenser 111, and the other end thereof is fixed on the first wall 10a; one end of the second partition plate assembly 13" is fixedly connected to the second condenser 112, and the other end thereof is fixed on the first wall 10a. The first partition plate assembly 13' and the second partition plate assembly 13" partition a cavity 1a into three subspaces 1b that are not in communication with each other; that is, both the first partition plate assembly 13' and the second partition plate assembly 13" are in an air-blocking state.

In case 1, the first refrigerant circuit and the second refrigerant circuit operate simultaneously, and in this case, the heat exchange unit 1 is in a full-power state, and the operating power P of the heat exchange unit 1 is the sum of the operating power P1 of the first refrigerant circuit and the operating power P2 of the second refrigerant circuit, that is, P = P1 + P2.

Specifically, the airflow that exchanges heat with the first condenser 111 flows in two corresponding subspaces 1b, and the airflow that exchanges heat with the second condenser 112 flows in one corresponding subspace 1b. The fans 12 disposed at the air supply port 10b corresponding to each subspace 1b operate to discharge the airflow in the corresponding subspace 1b. That is, the fans 12 corresponding to each layer of air supply ports 10b only generate a driving effect on the corresponding subspace 1b, thereby increasing the operational stability of the airflow.

In case 2, the first refrigerant circuit operates, and the second refrigerant circuit is closed. In this case, the heat exchange unit 1 is in a partial-power state, and the operating power P of the heat exchange unit 1 is the operating power P1 of the first refrigerant circuit, that is, P = P1.

Specifically, the second condenser 112 does not operate, and the fans 12 disposed at the air supply ports 10b corresponding to the second condenser 112 do not operate. The airflow can only enter the first condenser 111 to exchange heat with the first condenser 111. The airflow after heat exchange flows in two subspaces 1b corresponding to the first condenser 111, and the fans 12 at the air supply ports 10b corresponding to the two subspaces 1b operate to discharge the airflow in the corresponding subspaces 1b.

In case 3, the first refrigerant circuit is closed, and the second refrigerant circuit operates. In this case, the heat exchange unit 1 is in a partial-power state, and the operating power P of the heat exchange unit 1 is the operating power P2 of the second refrigerant circuit, that is, P = P2.

Specifically, the first condenser 111 does not operate, and the fans 12 disposed at two layers of air supply ports 10b corresponding to the first condenser 111 do not operate. The airflow can only enter the second condenser 112 to exchange heat with the second condenser 112. The airflow after heat exchange flows in one subspace 1b corresponding to the second condenser 112, and the fans 12 at the air supply port 10b corresponding to the subspace 1b operate to discharge the airflow.

Second embodiment: One end of the first partition plate assembly 13' is rotatably connected to the first condenser 111, and the other end thereof is a free end; one end of the second partition plate assembly 13" is rotatably connected to the second condenser 112, and the other end thereof is a free end.

In case 1, referring to FIG. 4, the first refrigerant circuit and the second refrigerant circuit operate simultaneously. In this case, the heat exchange unit 1 is in a full-power state, and the operating power P of the heat exchange unit 1 is the sum of the operating power P1 of the first refrigerant circuit and the operating power P2 of the second refrigerant circuit, that is, P = P1 + P2.

In this case, the first partition plate assembly 13' and the second partition plate assembly 13" are at a partition position, the free end of the first partition plate assembly 13' abuts against the first wall 10a, and the free end of the second partition plate assembly 13" abuts against a second wall. The airflow that exchanges heat with the first condenser 111 flows in two corresponding subspaces 1b, and the airflow that exchanges heat with the second condenser 112 flows in one corresponding subspace 1b. The fans 12 disposed at the air supply port 10b corresponding to each subspace 1b operate to discharge the airflow in the corresponding subspace 1b. That is, the fans 12 corresponding to each layer of air supply ports 10b only generate a driving effect on the corresponding subspace 1b, thereby increasing the operational stability of the airflow.

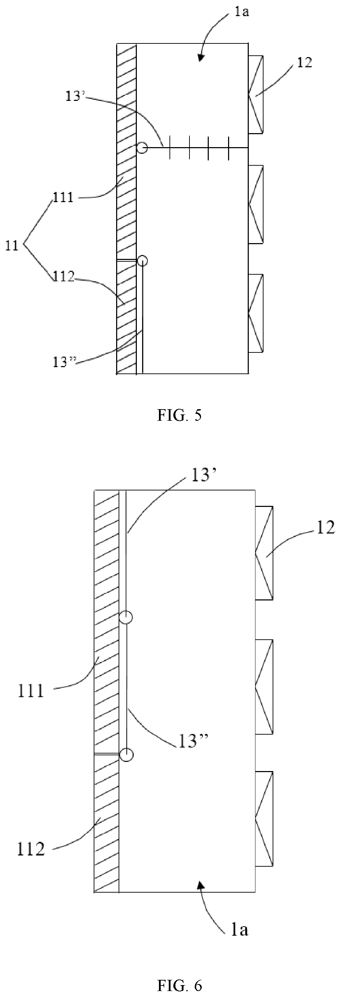

In case 2, referring to FIG. 5, the first refrigerant circuit is in an operating state, and the second refrigerant circuit is closed. The second partition plate assembly 13" is in an air-blocking state and blocks the second condenser 112, and one end of the first partition plate assembly 13' distal to the first condenser 111 abuts against the first wall 10a, and the first partition plate assembly is in a ventilation state. In this case, the heat exchange unit 1 is in a partial-power state, and the operating power P of the heat exchange unit 1 is the operating power P1 of the first refrigerant circuit, that is, P = P1.

Specifically, the second partition plate assembly 13" is at the blocking position, the free end of the second partition plate assembly 13" rotates clockwise in the circumferential direction to block the second condenser 112, and the second partition plate assembly 13" is in the air-blocking state; the airflow cannot be in contact with the second condenser 112 by means of the second partition plate assembly 13", and the airflow can only exchange heat with the first condenser 111; the free end of the first partition plate assembly 13' abuts against the first wall 10a, and the first partition plate assembly 13' is in the ventilation state, such that the airflows in the cavity 1a can circulate with each other; the fans 12 at the air supply port 10b corresponding to the first condenser 111 and the fans 12 at the air supply port 10b corresponding to the second condenser 112 both operate, and the airflow in the cavity 1a is discharged by means of the fans 12 at all layers. The air supply ports 10b on the first wall 10a relatively uniformly supply air, such that the temperature uniformity on one side of the first wall 10a facing away from the cavity is good, and the probability of airflow backflow is low.

In case 3, referring to FIG. 6, the first refrigerant circuit is closed, and the second refrigerant circuit is in an operating state. The first partition plate assembly 13' and the second partition plate assembly 13" jointly block the first condenser 111 and are in an air-blocking state. In this case, the heat exchange unit 1 is in a partial-power state, and the operating power P of the heat exchange unit 1 is the operating power P2 of the second refrigerant circuit, that is, P = P2.

Specifically, the first partition plate assembly 13' and the second partition plate assembly 13" are at the blocking position, the free end of the first partition plate assembly 13' rotates counterclockwise in the circumferential direction, the free end of the second partition plate assembly 13" rotates counterclockwise in the circumferential direction, the first partition plate assembly 13' and the second partition plate assembly 13" jointly block the first condenser 111, and the first partition plate assembly 13' and the second partition plate assembly 13" are in the air-blocking state; the airflow cannot be in contact with the first condenser 111 by means of the first partition plate assembly 13' and the second partition plate assembly 13", the airflow can only exchange heat with the second condenser 112, and the airflows circulate with each other in the cavity 1a; the fans 12 at the air supply port 10b corresponding to the first condenser 111 and the fans 12 at the air supply port 10b corresponding to the second condenser 112 both operate, and the airflow in the cavity 1a is discharged by means of the fans 12 at all layers. The air supply ports 10b on the first wall 10a relatively uniformly supply air, such that the temperature uniformity on one side of the first wall 10a facing away from the cavity is good, and the probability of airflow backflow is low.

The foregoing embodiments are merely used to illustrate the technical solutions of the present disclosure, rather than limit the same. Although the present disclosure has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present disclosure, and shall all fall within the scope of the claims and specification of the present disclosure. In particular, the technical features mentioned in the embodiments can be combined in any manner, provided that there is no structural conflict. The present disclosure is not limited to the specific embodiments disclosed herein, but encompasses all technical solutions falling within the scope of the claims.

### INDUSTRIAL APPLICABILITY

Disclosed in the present disclosure are a heat exchange unit and an energy storage device. The heat exchange unit includes a housing, a heat exchange system, a plurality of fans, and at least one partition plate assembly. The housing is provided with a first wall, the first wall is provided with a plurality of layers of air supply ports, the heat exchange system is provided with a condenser assembly, the condenser assembly is disposed on one side of the first wall in the thickness direction, a cavity is defined between the condenser assembly and the first wall, and the partition plate assembly is provided with a partition position. At the partition position, the partition plate assembly partitions the cavity into a plurality of subspaces that are not in communication with each other, and each subspace is in communication with the corresponding layer of air supply ports. According to the heat exchange unit provided in the embodiments of the present disclosure, the partition plate assembly partitions the cavity into a plurality of subspaces that are not in communication with each other at the partition position; the airflow after heat exchange can only flow in each respective subspace, and is discharged out of the housing under the action of the fan corresponding to each subspace. This can reduce the probability of turbulence in the airflow after heat exchange within the cavity due to the action of the fans at each layer and improve the uniformity of airflow circulation.

## Claims

1. A heat exchange unit, comprising:
a housing, wherein the housing is provided with a first wall, the first wall is provided with a plurality of layers of air supply ports, and the plurality of layers of air supply ports are spaced apart in a first direction;
a heat exchange system, wherein the heat exchange system is provided with a condenser assembly, the condenser assembly is disposed on one side of the first wall in a thickness direction, and a cavity is defined between the condenser assembly and the first wall, wherein the thickness direction is perpendicular to the first direction;
a plurality of fans, each layer of air supply ports being provided with the fans; and
at least one partition plate assembly, disposed in the cavity and spaced apart in the first direction, wherein the partition plate assembly is provided with a partition position; at the partition position, the partition plate assembly partitions the cavity into a plurality of subspaces, the plurality of subspaces are arranged in the first direction, and each subspace is in communication with a corresponding layer of air supply ports.

2. The heat exchange unit according to claim 1, wherein the fans are disposed in a one-to-one correspondence with the air supply ports.

3. The heat exchange unit according to claim 1, wherein the heat exchange system comprises at least two independent refrigerant circuits, each refrigerant circuit is provided with a condenser, condensers on the refrigerant circuits are arranged in the first direction and form the condenser assembly, and one side of the condenser on a single refrigerant circuit corresponds to at least one layer of air supply ports.

4. The heat exchange unit according to claim 3, wherein the refrigerant circuit is further provided with a compressor, an evaporator, a liquid receiver, a gas-liquid separator, and a throttle valve, and a venting port of the compressor, the condenser, the liquid receiver, the throttle valve, the evaporator, the gas-liquid separator, and an intake port of the compressor are connected in series to form the refrigerant circuit.

5. The heat exchange unit according to claim 3, wherein an operating state of the heat exchange unit comprises a full-power state; in the full-power state, the partition plate assembly is at the partition position, and each refrigerant circuit and each fan are in an operating state.

6. The heat exchange unit according to claim 3 or 5, wherein one end of the partition plate assembly is fixed on the condenser, and the other end thereof is fixed on the first wall; an operating state of the heat exchange unit comprises a partial-power state; in the partial-power state, the partition plate assembly is at the partition position, part of the refrigerant circuits and corresponding fans are in an operating state, and the other part of the refrigerant circuits and corresponding fans are in a closed state.

7. The heat exchange unit according to claim 3 or 5, wherein the partition plate assembly is movably disposed in the cavity, the partition plate assembly is provided with a blocking position, and at the blocking position, one side of the condenser on at least one refrigerant circuit facing the fan is blocked by the partition plate assembly.

8. The heat exchange unit according to claim 7, wherein an operating state of the heat exchange unit comprises a partial-power state; in the partial-power state, the condensers of part of the refrigerant circuits are blocked by the partition plate assembly, all layers of air supply ports are in communication with each other, and each fan is in an operating state, such that airflow in the cavity is delivered out via each air supply port.

9. The heat exchange unit according to claim 3 or 4, wherein one end of the partition plate assembly is rotatably connected to the condenser, and the other end thereof is a free end; the partition plate assembly swings about a rotating joint with the condenser.

10. The heat exchange unit according to claim 9, wherein the heat exchange unit comprises a driving mechanism, and the driving mechanism drives the partition plate assembly to rotate.

11. The heat exchange unit according to claim 10, wherein the heat exchange unit comprises a gear mechanism, a power output shaft of the driving mechanism is connected to the gear mechanism, the gear mechanism is connected to the partition plate assembly, and the driving mechanism drives the partition plate assembly to rotate by means of the gear mechanism.

12. The heat exchange unit according to claim 10 or 11, wherein the driving mechanism is a motor.

13. The heat exchange unit according to any one of claims 7 and 8, wherein the partition plate assembly comprises a first plate and a second plate, the first plate and the second plate are stacked, the first plate is provided with a plurality of first through holes, the second plate is provided with a plurality of second through holes, and the first plate and the second plate are capable of sliding relative to each other, such that the partition plate assembly switches between a ventilation state and an air-blocking state;
in the ventilation state, the first through holes and the second through holes are at least partially aligned, such that the airflow is capable of flowing through the first through holes and the second through holes;
in the air-blocking state, the first through holes and the second through holes are present in a staggered manner, such that the second plate blocks the first through holes, and the first plate blocks the second through holes.

14. The heat exchange unit according to claim 13, wherein the heat exchange unit comprises a driving mechanism, and the driving mechanism is capable of driving the partition plate assembly to rotate and driving the first plate and the second plate to slide relative to each other.

15. The heat exchange unit according to claim 14, wherein the heat exchange unit comprises a pull rod structure, the driving mechanism is connected to the pull rod structure, the pull rod structure is connected to the partition plate assembly, and the driving mechanism drives the pull rod structure to move so as to realize relative sliding of the first plate and the second plate.

16. The heat exchange unit according to claim 13, wherein the heat exchange unit comprises a spring, a permanent magnet, and an electromagnet; the electromagnet is fixed on the first plate, the permanent magnet is fixed on the second plate, and the spring connects the electromagnet and the permanent magnet; in a case that the electromagnet is energized, a magnetic moment is generated between the electromagnet and the permanent magnet to drive the second plate to move to the ventilation state, and in a case that the electromagnet is de-energized, the spring drives the second plate to restore to an initial state, wherein the initial state is a position where the second plate is in the air-blocking state.

17. The heat exchange unit according to claim 13, wherein one of the refrigerant circuits is a first refrigerant circuit, and the first refrigerant circuit is provided with a first condenser; the other refrigerant circuit is a second refrigerant circuit, and the second refrigerant circuit is provided with a second condenser; the first condenser corresponds to two layers of air supply ports, and the second condenser corresponds to one layer of air supply ports; a partition plate assembly connected to the first condenser is a first partition plate assembly, and a partition plate assembly connected to the second condenser is a second partition plate assembly;
in the partial-power state, the first refrigerant circuit is in an operating state, the second partition plate assembly is in the air-blocking state and blocks the second condenser, one end of the first partition plate assembly distal to the first condenser abuts against the first wall, and the first partition plate assembly is in the ventilation state.

18. The heat exchange unit according to claim 13, wherein one of the refrigerant circuits is a first refrigerant circuit, and the first refrigerant circuit is provided with a first condenser; the other refrigerant circuit is a second refrigerant circuit, and the second refrigerant circuit is provided with a second condenser; the first condenser corresponds to two layers of air supply ports, and the second condenser corresponds to one layer of air supply ports; a partition plate assembly connected to the first condenser is a first partition plate assembly, and a partition plate assembly connected to the second condenser is a second partition plate assembly;
in the partial-power state, the second refrigerant circuit is in an operating state, the first partition plate assembly and the second partition plate assembly jointly block the first condenser, and the first partition plate assembly and the second partition plate assembly are in the air-blocking state.

19. An energy storage device, comprising the heat exchange unit according to any one of claims 1 to 18.

20. The energy storage device according to claim 19, wherein the energy storage device comprises a battery pack and a coolant liquid loop, the coolant liquid loop flows through a cold plate in the battery pack, the heat exchange system is provided with an evaporator, and the coolant liquid loop exchanges heat with the evaporator.
